# EUROPÄISCHE PATENTSCHRIFT

(11) **EP 0 833 739 B1**
(45) Veröffentlichungstag und Bekanntmachung des Hinweises auf die Patenterteilung: **03.07.2002**
(21) Anmeldenummer: 96909044.8
(22) Anmeldetag: 06.04.1996
(51) Int. Cl.: B29C 51/10, B29K 21/00

(54) **VERFAHREN ZUR HERSTELLUNG EINER ELASTOMERMEMBRAN**
PROCESS FOR PRODUCING AN ELASTOMER DIAPHRAGM
PROCEDE DE PRODUCTION D'UNE MEMBRANE ELASTOMERE

(30) Priorität: 12.05.1995 DE 19517458
(43) Veröffentlichungstag der Anmeldung: 08.04.1998
(73) Patentinhaber: HELSA-WERKE HELMUT SANDLER GmbH & CO. KG, 95482 Gefrees (DE)
(72) Erfinder: BACK, Hans-Joachim, D-95502 Himmelkron (DE)
(74) Vertreter: LOUIS, PÖHLAU, LOHRENTZ & SEGETH
(86) Internationale Anmeldenummer: DE9600648
(87) Internationale Veröffentlichungsnummer: WO9635572

(56) Entgegenhaltungen:
- EP-A- 0 555 986
- WO-A-85/04364
- DE-A- 1 958 110
- DE-A- 2 453 132
- GB-A- 2 082 495
- PATENT ABSTRACTS OF JAPAN vol. 005, no. 006 (M-050), 16.Januar 1981 & JP,A,55 139215 (MITSUBISHI RAYON CO LTD), 30.Oktober 1980,

## Beschreibung

Die Erfindung betrifft ein Verfahren zur Herstellung einer vulkanisierten Elastomermembran, insbesondere für die Meßund Regeltechnik, z. B. für einen Gaszähler, mit einem eingewölbten Bereich.

Das Hauptanwendungsgebiet derartiger gewebeverstärkter Elastomermembranen besteht in der Verwendung der Membranen bei Gaszählern als volumenzählende hochflexible Teile. Insbesondere in diesem Fall sind die Anforderungen, die an die Elastomermembranen gestellt werden, extrem hoch; so wird zum Beispiel eine mechanische Belastbarkeit von 24 Jahren gefordert, ohne daß während dieser Zeit Undichtigkeiten auftreten dürfen. Darüberhinaus ist eine Chemikalienbeständigkeit, insbesondere gegenüber Erdgas, erforderlich.

Bekannte Membranen werden bisher durch mechanische Verformung unter Verwendung eines Patrizen/Matrizensatzes tiefgezogen; ein solches Verfahren ist etwa aus der EP 0 555 986 A1 bekannt. Bei der bekannten Herstellung wird das Material aus einem begrenzten Flankenbereich herausgezogen. Demzufolge wird die Tiefe der Einwölbung über eine Wandstärkenreduzierung des im Flankenbereich befindlichen Materials erreicht. Es kommt daher häufig entweder bereits während des Verformungsvorgangs oder später beim Einsatz der Membranen zu Undichtigkeiten. Besonders im Bereich von Kanten werden derartige Schwachstellen häufig beobachtet. Es ist daher erforderlich, die in bekannter Weise hergestellten Membranen einer aufwendigen und kostenintensiven Produktkontrolle zu unterziehen, und der Ausschuß bei Membranen, die für die eingangs erwähnte Verwendung in Gaszählern oder dergleichen bestimmt sind, ist extrem hoch.

Ein weiterer Mangel der in bekannter Weise hergestellten Membranen ist darin zu sehen, daß nach Beendigung des Verformungsprozesses eine Rückstellung stattfindet; es entsteht dabei eine bogenförmige Flankengeometrie, die zu einer Volumenreduzierung der Einwölbung führt, die für das Einsatzgebiet der Volumenzählung unerwünscht und zudem nur sehr schwer bestimmbar ist. Es ist sehr schwierig, diesem Nachteil bei der bekannten Technologie zu begegnen, da die Rückstellung von den Eigenschaften des verwandten Elastomermaterials, insbesondere von den Eigenschaften eines mit Elastomermaterial beschichteten Gewebes abhängt. Wie bereits angedeutet, erfordert das Rückstellverhalten der Membranen im Zuge des bekannten Verformungsprozesses insbesondere für eine Verwendung der Membranen für eine Volumenzählung, etwa als Gaszählermembranen, eine aufwendige sogenannte Napftiefenmessung. Dieses Erfordernis begrenzt die Herstellungskapazitäten, und der dabei als Ausschuß zu klassifizierende Anteil der Teile ist hoch.

Aus der DE 30 10 426 A1 ist ein Verfahren zum Verformen und Prägen einer thermoplastischen Platte zu einem tiefen Hohlkörper mit geprägter Oberflächenmaserung bekannt, wobei die ausgespannte Platte erwärmt und dann zum Vorstrecken auf die Oberseite eines konvexen Stempels aufgebracht und zwischen der Platte und der Stempeloberseite ein Vakuum erzeugt wird. Anschließend wird entweder der Stempel oder eine Matrize derart bewegt, daß beide längs ihren Umfangskanten dicht aneinander liegen, jedoch im Verformungsbereich für die Platte einen Zwischenraum freilassen. Zwischen der Matrize und der Platte wird ein Unterdruck und gleichzeitig wird zwischen der Platte und dem Stempel ein Überdruck erzeugt, so daß die Platte vom Stempel abgehoben und gegen die Matrize gezogen und gedrückt wird. Auf diese Weise wird die Platte genau der Gestalt der Matrize entsprechend verformt. Auch hier wird also ein mechanisches Verformen mittels eines Stempels durchgeführt, was an den Kanten bzw. Übergangsstellen zu einer Reduktion der Wanddicke des thermoplastischen Ausgangsmaterials führt.

Aus der GB-A-2 082 495 ist ein Verfahren zum Tiefziehen einer Membranflächenware bekannt, wobei das Material im Flankenbereich zunächst mechanisch vorgestreckt und auschließend aufgewölbt wird.

Der Erfindung liegt die Aufgabe zugrunde, ein Verfahren zur Herstellung einer Elastomermembran der eingangs genannten Art anzugeben, wobei die vorstehend geschilderten Mängel vermieden werden. Es soll also insbesondere die Herstellungskapazität gegenüber der bekannten Technologie erhöht und der dabei auftretende Ausschuß vermindert werden, und es wird angestrebt, die bislang erforderlichen Produktkontrollen nach dem Herstellungsprozeß zumindest erheblich zu reduzieren, ohne daß die Gefahr besteht, daß qualitativ nicht einwandfreie Membranen in den Handel gelangen.

Diese Aufgabe wird erfindungsgemäß durch die Merkmale des Anspruchs 1 gelöst. Bevorzugte Weiterbildungen des erfindungsgemäßen Verfahrens sind in den Unteransprüchen gekennzeichnet.

Bei der Herstellung der erfindungsgemäßen Membran kommt es somit nicht zu einer extremen Verformung im Flankenbereich, sondern der gesamte die Einwölbung bildende Bereich der Membranflächenware wird gleichmäßig gedehnt bzw. verformt. Dieser Bereich wird also aufgrund der allseitigen Wirkung einer Druckdifferenz quasi ballonförmig gedehnt und schließlich an die Oberfläche der Vertiefung des Werkzeugs angelegt. Die Membran weist somit in der gesamten Einwölbung die gleiche Wandstärke auf und zeigt bei ihrem Einsatz ein optimales "Abrollverhalten". Bei der Durchführung des erfindungsgemäßen Verfahrens wird die Originalgeometrie der Werkzeugvertiefung mit allen Winkeln und Radien genau abgebildet und durch Ausvulkanisieren der Membran festgehalten. Es läßt sich so beispielsweise eine gerade Ausführung von Flankenbereichen und an Stellen, wo dies erwünscht ist, ein scharfer Kantenverlauf erreichen, was sich an dem fertiggestellten Produkt erkennen läßt.

Durch Anwendung des erfindungsgemäßen Verfahrens, insbesondere durch die direkte Anlage des Membranwerkstoffs an dem auf Vulkanisiertemperatur erhitzten Werkzeug lassen sich schnellere Zykluszeiten erreichen, da nicht wie bei der bekannten Technologie die Vulkanisierung über Strahlungswärme durchgeführt wird. So läßt sich die Herstellungskapazität wenigstens um 20 % erhöhen.

Die Herstellung von Membranen mit einem bestimmten vorgegebenen Volumen ist erheblich vereinfacht, da die Produktionsgenauigkeit durch den Wegfall der eingangs beschriebenen, nachteiligen Rückstellung des Materials wesentlich erhöht wird. Dies wirkt sich aufgrund des Wegfalls von zeit- und kostenintensiven Produktkontrollen und der beträchtlichen Reduzierung von als Ausschuß zu klassifizierenden Teilen kostensenkend auf die Gesamtherstellungskosten aus.

Die Herstellung der Druckdifferenz zwischen beiden Seiten der in das Werkzeug eingebrachten Membranflächenware kann beispielsweise durch Beaufschlagung einer Seite der Membranflächenware mit einem unter Druck stehenden Gas, vorzugsweise mittels Druckluft, und durch Entlüftung der anderen Seite erzeugt werden.

Dabei hat es sich als vorteilhaft erwiesen, wenn das unter Druck stehende Gas vor Beaufschlagung der Membranflächenware erwärmt wird, da sich dann die Membranflächenware noch gleichmäßiger verformen kann und die von der Werkzeugvertiefung abgewandte Seite des Membranmaterials bereits durch das unter Druck stehende Gas vorerwämt ist und das Material daher schneller ausvulkanisiert.

Gleichermaßen vorteilhaft ist es, wenn die Druckdifferenz durch Herstellen eines Unterdrucks auf der der Vertiefung des Werkzeugs zugewandten Seite der Membranflächenware erzeugt wird.

Als ganz besonders vorteilhaft hat es sich erwiesen, wenn die vorstehend genannten Varianten kombiniert werden, etwa derart, daß zunächst auf der von der Werkzeugvertiefung abgewandten Seite der Membranflächenware ein Überdruck erzeugt wird, wodurch das Material ballonartig in die Vertiefung gedehnt wird und daraufhin durch Erzeugung eines Unterdrucks auf der der Werkzeugvertiefung zugewandten Seite des Membranmaterials ein Unterdruck erzeugt wird, welcher das Membranmaterial gegen die Geometrie der Werkzeugvertiefung "zieht". Hierfür hat es sich als besonders vorteilhaft erwiesen, wenn im Bereich von herzustellenden Kantenverläufen in der Werkzeugvertiefung Entlüftungs- bzw. Evakuierungsnuten vorgesehen sind, die mit einer Unterdruck erzeugenden Vorrichtung kommunizieren, so daß das Membranmaterial im Bereich des Kantenverlaufs in sehr geringfügigem Maße gegen die Nuten "gesogen" wird, wodurch ein gewünschter scharfkantiger Übergangsbereich erreicht werden kann.

Des weiteren hat es sich als vorteilhaft erwiesen, wenn der Formvorgang bei variierender Druckdifferenz, insbesondere bei verschiedenen Druckstufen durchgeführt wird. Der Formvorgang kann solchenfalls beispielsweise bei einer zunächst geringen Druckdifferenz begonnen werden, die nachfolgend insbesondere stufenweise, erhöht wird. Das Membranmaterial kann dann gleichmäßig gedehnt werden und aufgrund der gleichmäßigen Wirkung eines unter Druck stehenden Gases zu einer gleichmäßigen Wandstärke fließen.

Gute Ergebnisse wurden auch dadurch erzielt, daß die Druckdifferenz, nachdem das Membranmaterial in Anlage an die Werkzeugvertiefung gebracht wurde, verringert wird. Eine auf einem Gewebe aufgebrachte Beschichtung neigt dann weniger dazu, durch das Gewebe hindurchzutreten, und es kann eine bezüglich des Gewebes symmetrische Sandwich-Struktur aufrechterhalten werden.

Mit dem erfindungsgemäßen Verfahren ergibt sich die Möglichkeit, die Ausformung und Ausvulkanisierung der Membran über die Höhe und den zeitlichen Verlauf der Druckdifferenz sowie über die Werkzeugtemperatur und die Dauer eines Herstellungszyklus zu steuern. Zu diesem Zweck hat es sich desweiteren als günstig erwiesen, wenn das Werkzeug und/oder die Membranflächenware vor Einbringen in das Werkzeug vorerwärmt werden.

Die beigefügte Zeichnung und die nachfolgende Beschreibung dienen der weiteren Erläuterung des erfindungsgemäßen Verfahrens. In der Zeichnung zeigt:
- Figur 1: ein geöffnetes Werkzeug mit einer in das Werkzeug eingebrachten Membranflächenware;
- Figur 2: das Werkzeug nach Figur 1 im geschlossenen Zustand bei Beginn der Verformung des Membranmaterials;
- Figur 3: dasselbe Werkzeug bei fortgeschrittenem Verformungszustand des Membranmaterials und
- Figur 4: dasselbe Werkzeug mit der eingebrachten Membran nach vollständiger Verformung und Vulkanisation.

Figur zeigt ein Werkzeug 10, in das ein Abschnitt einer Membranflächenware 12 eingebracht ist. Das Werkzeug 10 umfaßt ein beheizbares Werkzeugoberteil 14 und ein beheizbares Werkzeugunterteil 16. Das Werkzeugoberteil 14 weist eine in das Werkzeuginnere führende Öffnung 18 auf, an die eine nicht dargestellte Vorrichtung zur Druckerzeugung anschließbar ist. Das Werkzeugoberteil 14 weist ferner eine flache kegelstumpfförmige Ausnehmung 20 auf, die entsprechend der Form der herzustellenden Membran scharfe Abkantungen 22 und 24 aufweist. Das Werkzeugunterteil 16 ist im Bereich der Abkantungen 22, 24 des Werkzeugoberteils 14 komplementär hierzu ausgebildet. Es weist desweiteren eine der herzustellenden Membrankontur entsprechende Vertiefung 26 auf, die an ihrem Boden 28 in etwa sphärische Auswölbungen 30 aufweist.

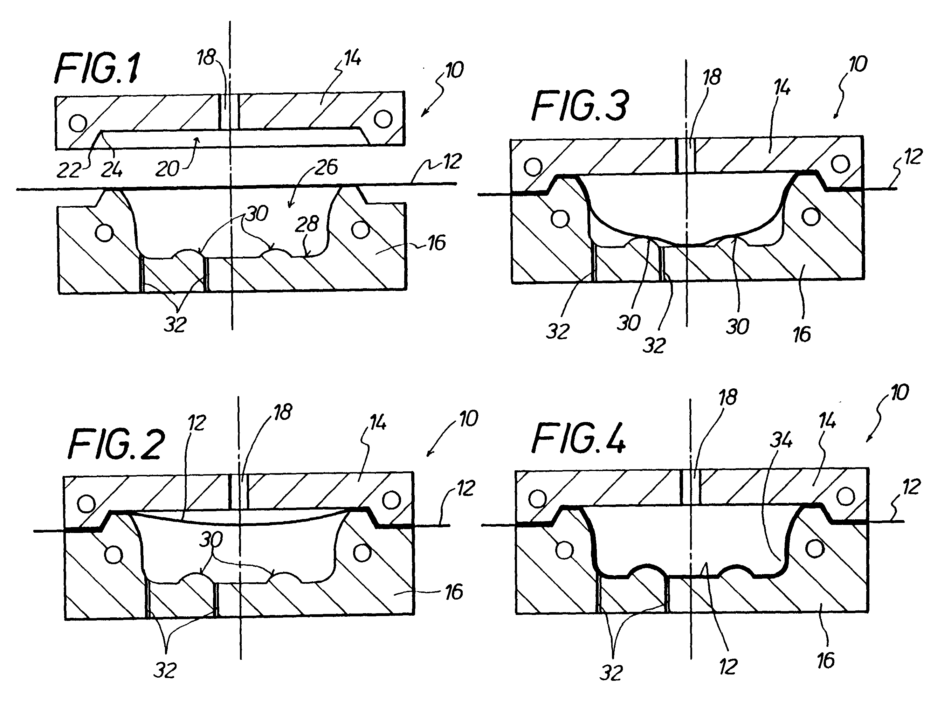

Die in das Werkzeug 10 eingebrachte Membrachflächenware wurde über ein nicht dargestelltes Vorheizelement erwärmt und sodann in das geöffnete Werkzeug eingezogen. Anschließend wird das Werkzeug 10, wie in der Figur 2 gezeigt ist, geschlossen, wobei das Membranmaterial zwischen dem Werkzeugoberteil 14 und dem Werkzeugunterteil 16 eingeklemmt wird, so daß eine gasdichte Abdichtung der dem Membranoberteil 14 zugewandten Seite der Membran von der dem Membranunterteil 16 zugewandten Seite der Membran erreicht wird. Das Werkzeug ist vorzugsweise bereits auf Vulkanisiertemperatur aufgeheizt. Durch die Öffnung 18 wird nun auf die dem Werkzeugoberteil 14 zugewandte Seite der Membran 12 vorzugsweise erwärmte Druckluft eingebracht, wodurch die Membran 12 die in der Figur 2 dargestellte Form einnimmt. Die Vertiefung 26 wird dabei durch Entlüftungsöffnungen 32 entlüftet.

Figur 3 zeigt die Membran 12 bei fortgeschrittener Verformung. Es hat sich als vorteilhaft erwiesen, etwa bei diesem Verfahrensstand über die Entlüftungsöffnungen 32 den Verformungsvorgang durch Evakuierung der dem Werkzeugunterteil 16 zugewandten Seite der Membran 12 zu unterstützen. Durch entlang des kantigen Übergangsbereichs zwischen den sphärischen Auswölbungen 30 zu dem Boden 28 der Vertiefung 16 verlaufende Entlüftungs- bzw. Evakuierungsnuten kann die Ausbildung einer entsprechend kantigen, also unstetig verlaufend Membrankontur unterstützt werden.

Figur 4 zeigt schließlich die Membran 12 in ihrer endgültigen Verformung, in der die Vulkanisation stattfindet, wenn das Membranmaterial gegen die auf Vulkanisationstemperatur erwärmte Werkzeugoberfläche anliegt.

Der Druck- und/oder Evakuierungsvorgang kann bei variierenden Drücken oder auch verschiedenen Druckstufen erfolgen. Die Verformung kann vorteilhafterweise bei niedriger Druckdifferenzen begonnen und anschließend bei höheren Druckdifferenzen fortgesetzt werden; nach Erreichen der endgültigen Verformung kann dann die Druckdifferenz herabgesetzt werden. Die Höhe sowie der zeitliche Verlauf des Drucks können variabel an die jeweils zu erzeugende Membranenkontur bzw. -geometrie angepaßt werden. Die Formung bzw. Vulkanisation der Membrane kann dabei durch Steuerung der Höhe und des zeitlichen Verlaufs des Drucks bzw. der Druckdifferenz sowie der Werkzeugtemperatur und der Dauer des Vulkanisationszykluses gesteuert werden. Kurz vor Beendigung des Vulkanisationsvorgangs wird die Druckdifferenz im Werkzeug weggenommen, und das Werkzeug wird entlüftet. Anschließend wird das Werkzeug 10 geöffnet und das geformte Teil aus dem Werkzeug entnommen.

## Patentansprüche

1. Verfahren zur Herstellung einer vulkanisierten Elastomermembran in einem Werkzeug (10), das zwei Werkzeugteile (14, 16) aufweist, wobei eine ebene Membranflächenware (12), bestehend aus einer Sandwich-Struktur mit einer eine beidseitige Elastomerbeschichtung aufweisenden Gewebeschicht, zwischen den beiden Werkzeugteilen (14, 16) des geöffneten, auf Vulkanisiertemperatur aufgeheizten Werkzeuges (10) eingebracht wird, wobei das eine Werkzeugteil (16) eine der herzustellenden Einwölbung der Membran entsprechende Vertiefung (26) aufweist, das Werkzeug (10) geschlossen und die Membranflächenware (12) zwischen den Werkzeugteilen (14, 16) abgedichtet festgelegt wird, und zwischen beiden Seiten der Membranflächenware (12) im geschlossenen Zustand des Werkzeugs (10) eine Druckdifferenz eingestellt wird, wodurch die Membranflächenware (12) an die Werkzeugoberfläche der Vertiefung (26) des entsprechenden Werkzeugteils (16) angelegt und ausvulkanisiert wird,
**dadurch gekennzeichnet,**
**daß** die Membranflächenware (12) im geschlossenen Zustand des Werkzeugs (10) vor dem Einstellen der Druckdifferenz zwischen den beiden Werkzeugteilen (14, 16) eben eingespannt und die Membranflächenware (12) vor dem Einbringen in das Werkzeug (10) vorerwärmt wird, daß die Druckdifferenz durch Beaufschlagung einer Seite der Membranflächenware (12) mit Druckluft und durch Entlüftung der anderen Seite erzeugt wird, daß die Druckluft vor der Beaufschlagung der Membranflächenware (12) erwärmt wird, und daß der Formvorgang bei variierender Druckdifferenz durchgeführt wird.

2. Verfahren nach Anspruch 1 oder 2,
**dadurch gekennzeichnet,**
**daß** das Werkzeug vor Einbringen der Membranflächenware vorerwärmt, insbesondere auf Vulkanisiertemperatur gebracht wird.

3. Verfahren nach Anspruch 1,
**dadurch gekennzeichnet,**
**daß** der Formvorgang bei verschiedenen Druckstufen durchgeführt wird.

4. Verfahren nach Anspruch 3,
**dadurch gekennzeichnet,**
**daß** der Formvorgang bei niedriger Druckdifferenz begonnen und nachfolgend erhöht wird.

5. Verfahren nach Anspruch 3 oder 4,
**dadurch gekennzeichnet,**
**daß** die Druckdifferenz verringert wird, nachdem das Membranmaterial in Anlage an die Werkzeugform gebracht wurde.

6. Verfahren nach einem der Ansprüche 1 bis 5,
**dadurch gekennzeichnet,**
**daß** die Höhe und der zeitliche Verlauf der Druckdifferenz sowie die Werkzeugtemperatur und die Dauer über einen Zyklus gesteuert wird.

## Claims

1. Method for producing a vulcanized elastomeric diaphragm in a mould (10) which has two mould parts (14, 16), wherein a planar diaphragm sheet product (12), consisting of a sandwich structure with a fabric layer having an elastomeric coating on both sides is introduced between the two mould parts (14, 16) of the open mould (10) heated to vulcanizing temperature; wherein one mould part (16) has a depression (26) corresponding to the diaphragm concavity to be produced, the mould (10) is closed and the diaphragm sheet product (12) is secured, sealed off, between the mould parts (14, 16) and a pressure difference is established between the two sides of the diaphragm sheet product (12), with the mould (10) in the closed state, with the result that the diaphragm sheet product (12) is laid onto the mould surface of the depression (26) of the corresponding mould part (16) and fully vulcanized, **characterized in that**, with the mould (10) in the closed state, the diaphragm sheet product (12) is clamped planar between the two mould parts (14, 16) before the pressure difference is established, and the diaphragm sheet product (12) is preheated before being introduced into the mould (10); **in that** the pressure difference is generated by one side of the diaphragm sheet product (12) being acted upon by compressed air and by the other side being vented; **in that** the compressed air is heated before the diaphragm sheet product (12) is acted upon; and **in that** the forming operation is carried out with a varying pressure difference.

2. Method according to Claim 1 or 2, **characterized in that** the mould is preheated, in particular brought to vulcanizing temperature, before the introduction of the diaphragm sheet product.

3. Method according to Claim 1, **characterized in that** that the forming operation is carried out in different pressure stages.

4. Method according to Claim 3, **characterized in that** the forming operation is commenced with a low pressure difference and is subsequently increased.

5. Method according to Claim 3 or 4, **characterized in that** the pressure difference is reduced after the diaphragm material has been laid against the mould form.

6. Method according to one of Claims 1 to 5, **characterized in that** the magnitude and time profile of the pressure difference and also the mould temperature and the duration are controlled over a cycle.

## Revendications

1. Procédé pour la production d'une membrane en élastomère vulcanisé dans un outillage (10) constitué par deux portions (14 et 16), du type dans lequel un article constituant une face en forme de membrane (12), se composant d'une structure en sandwich consistant en une nappe présentant sur ses deux faces une couche d'élastomère est introduit entre les deux portions (14, 16) de l'outillage (10) chauffées à la température de vulcanisation, la portion (16) présentant un creux (26) correspondant à la convexité de la membrane, obturant l'outillage (10), et l'article constitué par une surface en forme de membrane (12) est fixé hermétiquement entre les portions (14 et 16), et, entre les deux côtés de l'article (12) est établie une différence de pression dans l'état fermé de l'outillage (10) grâce à quoi l'article (12) est immobilisé et vulcanisé le long de la surface supérieure du creux (26) de la portion correspondante (16), **caractérisé en ce que** l'article (12), à l'état fermé de l'outillage (10), avant l'établissement de la différence de pression entre les deux portions (14, 16) est uniformément tendu et l'article (12) est préchauffé avant d'être introduit dans l'outillage (10), la différence de pression est obtenue par application d'air sous pression sur un côté de l'article (12) et une ventilation sur l'autre côté, l'air sous pression est échauffé avant son application sur l'article (12) et la conformation est conduite sous l'action d'une pression différentielle variable.

2. Procédé selon la revendication 1, dans lequel l'outillage est échauffé, en particulier porté à la température de vulcanisation, avant introduction de l'article (12).

3. Procédé selon la revendication 1, **caractérisé en ce que** le processus de conformation est conduit par des degrés variables de pression.

4. Procédé selon la revendication 3, **caractérisé en ce que** le processus de conformation est amorcé à une pression différentielle faible puis accrue.

5. Procédé selon la revendication 3 ou 4, **caractérisé en ce que** la pression différentielle est réduite après que le matériau constituant la membrane ait été amené à la forme de l'outillage.

6. Procédé selon l'une des revendications 1 à 5, **caractérisé en ce que** l'intensité et le déroulement dans le temps de la pression différentielle, ainsi que la température de l'outillage et la durée, sont conduits cycliquement.
